# EUROPÄISCHE PATENTANMELDUNG

(11) **EP 4 836 294 A1**
(43) Veröffentlichungstag der Anmeldung: **04.11.2026**
(21) Anmeldenummer: 25173701.1
(22) Anmeldetag: 30.04.2025
(51) Int. Cl.: H02S 50/00

(54) **VERFAHREN ZUM OPTIMIERTEN NACHFÜHREN EINER PHOTOVOLTAIKANLAGE MITTELS EINES MASCHINELLEN LERNALGORITHMUS**

(71) Anmelder: Fraunhofer-Gesellschaft zur Förderung der angewandten Forschung e.V., 80686 München (DE)
(72) Erfinder: BERWIND, Matthew, 79110 Freiburg (DE); DEMANT, Matthias, 79110 Freiburg (DE); KURUMUNDAYIL, Leslie, 79110 Freiburg (DE); BURKHARDT, Daniel, 79110 Freiburg (DE); BRUNO, Maddalena, 79110 Freiburg (DE)
(74) Vertreter: LBP Lemcke, Brommer & Partner Patentanwälte mbB

(57) **Zusammenfassung**

Die Erfindung betrifft ein optimiertes Nachführen von Photovoltaikelementen einer Photovoltaikanlage. Dabei wird anhand von Geometrie der Photovoltaikanlage und Wetterdaten eine Verteilung der Sonnenbestrahlungsstärke mittels eines maschinellen Lernalgorithmus berechnet.

## Beschreibung

Die Erfindung betrifft ein Verfahren zum optimierten Nachführen einer Photovoltaikanlage mittels eines maschinellen Lernalgorithmus, ein computer-implementiertes Verfahren zum optimierten Nachführen einer Photovoltaikanlage, einen Trainingsdatensatz für das Training eines maschinellen Lernalgorithmus zur Berechnung einer Verteilung der Sonnenbestrahlungsstärke für eine Photovoltaikanlage, ein Computerprogramm sowie eine Photovoltaikanlage.

Photovoltaikanlagen weisen üblicherweise eines oder mehrere Photovoltaikmodule auf. Photovoltaikmodule wandeln Energie eingestrahlten Sonnenlichts in elektrische Energie um. Einmal installiert, werden die Photovoltaikmodule üblicherweise über Jahre betrieben, bis sie ihre Effizienz sehr gering wird oder sie nicht mehr funktionieren. Ihre baulichen Eigenschaften, wie Effizienz und Abmessungen, sind nach der Installation daher nur noch auf aufwendige Weise beeinflussbar. Der Ertrag von Photovoltaikmodulen hängt zudem maßgeblich von der Bestrahlung durch die Sonne ab. Eine eingestrahlte Leistung auf ein Photovoltaikmodul setzt sich aus einer direkten Bestrahlung und aus einer diffusen Bestrahlung zusammen, welche beide vom Stand der Sonne abhängen. Da die Sonne ihren Stand ändert, und damit die eingestrahlte Leistung von der Ausrichtung der Photovoltaikmodule relativ zur Sonne abhängt, werden die Photovoltaikmodule üblicherweise um einen oder mehrere Winkel nachführbar installiert. In einfacher Weise können die Photovoltaikmodule so nachgeführt werden, dass ihre Flächennormalen ständig zur Sonne weisen. Dies ist jedoch im Allgemeinen nicht optimal, da der Einfluss diffuser Einstrahlung vernachlässigt wird und es insbesondere bei tiefstehender Sonne zu gegenseitiger Abschattung benachbarter Photovoltaikmodule kommen kann.

Aus dem Stand der Technik sind daher komplexe Verfahren zum Nachführen von Photovoltaikmodulen bekannt, die solche Einflussfaktoren berücksichtigen. Mittels Raytracing wird dabei abhängig von der Ausrichtung der Photovoltaikmodule eine Verteilung der Sonnenbestrahlungsstärke simuliert. Eine solche Simulation ist jedoch rechenintensiv und erfordert daher viel Energie und Zeit.

Es ist daher die Aufgabe der Erfindung, ein optimiertes Verfahren zum Nachführen von Photovoltaikmodulen einer Photovoltaikanlage vorzuschlagen, insbesondere unter gemischten Wetterbedingungen.

Diese Aufgabe wird gelöst durch ein Verfahren gemäß Anspruch 1, durch ein computer-implementierte Verfahren nach Anspruch 13, durch einen Trainingsdatensatz nach Anspruch 14, ein Computerprogramm nach Anspruch 15 sowie durch eine Photovoltaikanlage nach Anspruch 16. Weitere vorteilhafte Ausführungsformen finden sich in den rückbezogenen Ansprüchen. Hiermit wird der Wortlaut der Ansprüche explizit per Referenz in die Beschreibung aufgenommen.

Das erfindungsgemäße Verfahren zum optimierten Nachführen einer Photovoltaikanlage mittels eines maschinellen Lernalgorithmus, für eine Photovoltaikanlage mit mehreren Photovoltaikmodulen, welche in einer Installationshöhe über einer Installationsfläche angebracht sind, umfasst die folgenden Verfahrensschritte:
A Auswählen mehrerer Werte zumindest eines Neigungswinkels der Photovoltaikmodule;
B Festlegen einer Referenzebene;
C Erstellen eines Höhenbilds der Photovoltaikanlage für jeden ausgewählten Wert des zumindest einen Neigungswinkels derart, dass das Höhenbild für eine Vielzahl an Punkten der Installationsfläche eine Höheninformation ausgehend von der Referenzebene umfasst;
D Bereitstellen von Eingangsdaten, welche zumindest Wetterdaten für zumindest einen Zeitpunkt umfassen;
E Berechnen einer Verteilung der Sonnenbestrahlungsstärke zumindest auf Installationshöhe und/oder entlang der Installationsfläche für jedes Höhenbild und den zumindest einen Zeitpunkt anhand des Höhenbilds und der Eingangsdaten mittels des maschinellen Lernalgorithmus;
F Auswerten einer Zielfunktion für jede der in Verfahrensschritt E berechneten Verteilungen der Sonnenbestrahlungsstärke, wobei die Zielfunktion zumindest von der Verteilung der Sonnenbestrahlungsstärke abhängt;
G Auswählen von zumindest einem Wert des Neigungswinkels anhand der Zielfunktion für den zumindest einen Zeitpunkt.

Das erfindungsgemäße Verfahren unterscheidet sich somit in folgenden Aspekten von vorbekannten Verfahren: Der maschinelle Lernalgorithmus ersetzt zeitaufwändige Simulationen, wie beispielsweise Raytracer-Simulationen, und ermöglicht die Berechnung der Verteilungen der Sonnenbestrahlungsstärke für verschiedene Wetter- und Neigungskonfigurationen innerhalb kürzester Zeit. Dies wird erst durch die Aufbereitung der Gegebenheiten der Photovoltaikanlage als Höhenbild ermöglicht, welches Höhenbild zusammen mit den Wetterdaten als Eingangsdaten Eingang in den maschinellen Lernalgorithmus findet.

Hierdurch ergibt sich der erfindungsgemäße Vorteil, dass die vergleichsweise schnelle und kostengünstige Analyse verschiedenartiger Pflanzen- und PV-Kombinationen möglich ist und dadurch eine optimale Konfiguration der Photovoltaikanlage anhand der erwarteten Wetterbedingungen am Standort erfolgen kann. Das erfindungsgemäße Verfahren ermöglicht die Nachführung und Konfiguration von Photovoltaikanlage mit hoher Geschwindigkeit und Präzision. Das Verfahren dient zum Nachführen einer Photovoltaikanlage mit mehreren Photovoltaikmodulen, ist jedoch ebenfalls mit einem einzelnen Photovoltaikmodul ausführbar. Die Photovoltaikmodule sind oberhalb einer Installationsfläche und auf einer Installationshöhe installiert. Die Installationsfläche kann eine Topologie in Form von Unebenheiten aufweisen und verläuft im Allgemeinen daher nicht vollständig parallel zu der Modulebene. Die Installationshöhe kann für unterschiedliche Photovoltaikmodule verschieden sein, insbesondere abhängig von der Topologie.

Bevorzugt sind die Photovoltaikmodule in einer Modulebene angeordnet, sodass die Installationshöhe für alle Photovoltaikmodule gleich ist. Dies bedeutet, dass der Abstand zwischen Installationshöhe und einer näherungsweise angenommenen Ebene der Installationsfläche identisch ist.

Photovoltaikmodule weisen typischerweise eine flächige Geometrie auf, wobei zumindest eine erste Seite eine aktive Fläche zur Umwandlung von Sonnenlicht in elektrische Energie ist. Die Photovoltaikmodule werden nachgeführt, indem sie zumindest um eine etwa horizontale Achse geneigt werden. Der Neigungswinkel ist der Winkel, der von einer Flächennormalen der ersten Seite eines geneigten Photovoltaikmoduls und einer Flächennormalen des ungeneigten Photovoltaikmoduls eingeschlossen wird. Die Photovoltaikmodule können gemeinsam geführt werden, indem alle Photovoltaikmodule denselben Neigungswinkel aufweisen, oder sie können individuell geneigt werden, sodass unterschiedliche Photovoltaikmodule unterschiedliche Neigungswinkel aufweisen können.

Im Verfahrensschritt A werden mehrere Werte zumindest eines Neigungswinkels der Photovoltaikmodule ausgewählt, bevorzugt in 1-Grad-Schritten oder in 2-Grad-Schritten. Wie vorstehend beschrieben können die Photovoltaikmodule denselben Winkel aufweisen. In diesem Fall werden für den gemeinsamen Neigungswinkel aller Photovoltaikmodule mehrere Werte ausgewählt. Alternativ werden für unterschiedliche Photovoltaikmodule mehrere Werte des jeweils individuellen Neigungswinkels ausgewählt. Bevorzugt werden die Werte der Neigungswinkel der Photovoltaikmodule in einem Bereich zwischen 1 Grad und 40 Grad, bevorzugt zwischen 1 Grad und 10 Grad ausgewählt.

In Verfahrensschritt B wird eine Referenzebene festgelegt. Bevorzugt verläuft die Referenzebene oberhalb der höchsten Installationshöhe oder parallel zu einer näherungsweise angenommenen Ebene der Installationsfläche. Unter dem Begriff "Referenzebene" werden im Rahmen dieser Beschreibung auch schiefe Ebenen, gekrümmte Ebenen oder Referenzverläufe verstanden.

Die Referenzebene und die ausgewählten Werte des Neigungswinkels werden in Verfahrensschritt C verwendet, um für jeden ausgewähltem Neigungswinkel ein Höhenbild zu erstellen. Sind die Neigungswinkel mehrerer Photovoltaikmodule unabhängig voneinander, dann wird bevorzugt für mehrere Kombinationen von ausgewählten Neigungswinkeln ein Höhenbild erstellt. Die Referenzebene ist in jedem Höhenbild einer Durchführung des Verfahrens gleich. Ein Höhenbild umfasst für eine Vielzahl an Punkten ausgehend von der Referenzebene eine Höheninformation. Ein Punkt eines Höhenbilds ist eine Position bezüglich einer senkrechten Projektion der Installationsfläche auf die Referenzebene. Eine Höheninformation ist ein Abstand oder eine Mehrzahl an Abständen zu der Referenzebene. Die Höheninformation umfasst zumindest den Abstand zwischen Referenzebene und dem ausgehend von der Referenzebene senkrecht liegenden entsprechenden Punktes eines Photovoltaikmoduls.

In einer bevorzugten Ausführungsform der Erfindung umfasst eine Höheninformation mehrere Abstände, insbesondere bevorzugt einen Abstand zu der Installationsfläche sowie ein Abstand zu einer ersten und zu einer zweiten Seite eines Photovoltaikmoduls in einer senkrechten Projektion auf die Referenzebene. Jede Höheninformation ist einem Punkt der Referenzebene zuordenbar und stellt somit eine ortsaufgelöste Abstandsinformation zu der Referenzebene dar. Ist eine Flächennormale eines Photovoltaikmoduls parallel zu einer Flächennormalen der Referenzebene ausgerichtet, dann weisen Punkte auf dem Photovoltaikmodul denselben Abstand zu der Referenzeben auf. Im Allgemeinen sind die Photovoltaikmodule aber geneigt, sodass Punkte auf dem Photovoltaikmodul unterschiedliche Abstände zur Referenzebene aufweisen. Anhand dieser Höheninformation kann ein Neigungswinkel der Photovoltaikmodule ermittelt werden.

Die Installationsfläche wird bevorzugt als ebene Fläche in einem mittleren Abstand von der Referenzebene angenähert oder sie umfasst ortsabhängig unterschiedliche Abstände zur Referenzebene, beispielsweise aufgrund von Unebenheiten des Bodens, in Form einer Topologie.

In Verfahrensschritt D werden Eingangsdaten bereitgestellt. Diese umfassen zumindest Wetterdaten für zumindest einen Zeitpunkt. Bei den Wetterdaten handelt es sich um berechnete zukünftige Werte und/oder um gemessene und/oder berechnete historische Werte. Von den Wetterdaten ist zumindest ein Sonnenstand umfasst.

In Verfahrensschritt E wird für jedes Höhenbild (und somit für jeden Neigungswinkel) eine Verteilung der Sonnenbestrahlungsstärke berechnet, welche einer Vielzahl an Punkten auf Installationshöhe und/oder entlang der Installationsfläche eine Sonnenbestrahlungsstärke zuordnet. Die Berechnung wird mittels des maschinellen Lernalgorithmus durchgeführt und hängt von den Eingangsdaten ab. Die in den Eingangsdaten enthaltenen Wetterdaten sind auf unterschiedliche Zeitpunkte bezogen, sodass die Berechnung für jeden Zeitpunkt der Eingangsdaten durchgeführt wird.

In Verfahrensschritt F wird für jede zuvor berechnete Verteilung der Sonnenbestrahlungsstärke eine Zielfunktion ausgewertet. Die Zielfunktion hängt zumindest von der Verteilung der Sonnenbestrahlungsstärke - und bevorzugt von weiteren Größen - ab und stellt ein Maß für eine Güte eines Neigungswinkels (oder einer Kombination an Neigungswinkeln) für einen bestimmten Zeitpunkt dar.

Abhängig von der zuvor ausgewerteten Zielfunktion für jeden Neigungswinkel und jeden Zeitpunkt wird in Verfahrensschritt G zumindest ein Neigungswinkel für jeden Zeitpunkt ausgewählt. In einer bevorzugten Ausführungsform des erfindungsgemäßen Verfahrens wird für jeden Zeitpunkt der optimale Wert der Zielfunktion ermittelt. Als Neigungswinkel wird dann derjenige ausgewählt, für den die Zielfunktion optimal ist.

Die Zielfunktion hängt, wie vorstehend beschrieben, von einer Verteilung der Sonnenbestrahlungsstärke ab. In einer bevorzugten Ausführungsform hängt die Zielfunktion zusätzlich von einer durchschnittlichen Sonnenbestrahlungsstärke auf Installationshöhe und/oder einem Energieertrag der Photovoltaikanlage und/oder einem auf die Stromnachfrage und/oder den Pflanzenbedürfnissen von auf der Installationsfläche angebauten Pflanzen ab. Die Auswahl zumindest eines Neigungswinkels hängt von der Zielfunktion ab. Durch die Berücksichtigung der genannten weiteren Größen in der Zielfunktion ist es möglich, die Zielfunktion genauer an Bedürfnisse bei der Verwendung der Photovoltaikanlage anzupassen. Eine erhöhte Stromnachfrage deutet an, dass es für das Stromnetz vorteilhaft ist, wenn zusätzlicher Strom eingespeist wird, sodass durch entsprechendes Nachführen abhängig von der Stromnachfrage das Stromnetz unterstützt werden kann. Bei einer geringen oder negativen Stromnachfrage hingegen kann die Berücksichtigung der Stromnachfrage dazu führen, dass entsprechende Beiträge zur Zielfunktion sich derart auswirken, dass ein geringerer Stromertrag optimal ist. Bei einer Nutzung der Installationsfläche als Agrarfläche können sich die Photovoltaikmodule nachteilig auf angebaute Pflanzen auswirken, wenn zu lange abgeschattet wird. Alternativ ist es möglich, die Abschattung durch die Photovoltaikmodule gezielt einzusetzen, um Pflanzen auf der Installationsfläche vor zu intensiver Sonneneinstrahlung zu schützen. Die Berücksichtigung von Pflanzenbedürfnissen in der Zielfunktion bewirkt, dass die Photovoltaikmodule so nachgeführt werden können, dass eine zu starke Abschattung oder eine zu starke Sonneneinstrahlung vermieden wird und somit Pflanzen besser gedeihen.

Wie im Vorangegangenen beschrieben, kann in Verfahrensschritt F beispielsweise für jeden Zeitpunkt derjenige Neigungswinkel ausgewählt werden, für den die Zielfunktion optimal ist. In einer bevorzugten Ausführungsform wird der Neigungswinkel abhängig von einem Optimierungsalgorithmus ausgewählt. Somit kann auf effiziente Weise eine optimale Sequenz von Neigungswinkeln effizient ermittelt werden. Dadurch ist es möglich auch eine Sequenz von Neigungswinkeln zu berücksichtigen, und nicht Werte der Zielfunktion zu einem Zeitpunkt.

In einer bevorzugten Ausführungsform wird ein weiterer Verfahrensschritt ausgeführt, in dem die in Verfahrensschritt G ausgewählten Werte an der Photovoltaikanlage eingestellt werden und die Photovoltaikmodule entsprechend nachgeführt werden.

Die Photovoltaikmodule werden üblicherweise mittels einer motorbetriebenen Nachführeinrichtung geneigt, welche Energie benötigt. Die benötigte Energie hängt davon ab, wie weit zwischen zwei Zeitpunkten der Neigungswinkel verändert wird. Beispielsweise kann für zwei Neigungswinkel ein ähnlicher Wert der Zielfunktion ermittelt werden, wobei der leicht bessere Neigungswinkel einer größeren Neigung bedarf. Würde derjenige Neigungswinkel mit leicht besserem Wert der Zielfunktion ausgewählt, dann könnte der der Energiebedarf zum Nachführen größer sein als der bessere Ertrag durch den leicht besseren Wert der Zielfunktion. Mittels des Optimierungsalgorithmus wird bevorzugt eine Verlustfunktion optimiert, welche von den in Verfahrensschritt F ermittelten Werten der Zielfunktion sowie von einem Energiebedarf zum Nachführen der Photovoltaikmodule abhängt. Dadurch ist eine optimale Sequenz von Neigungswinkeln ermittelbar, welche einen Energieverbrauch, der zum Nachführen der Photovoltaikmodule benötigt wird, in ein optimales Verhältnis zum Einstellen des Neigungswinkels setzt.

Photovoltaikmodule weisen eine erste Seite auf und eine zweite Seite auf, welche gegenüberliegend angeordnet sind. Die erste Seite ist bevorzugt eine Oberseite und ihre Flächennormale weist in einem installierten Zustand im Wesentlichen Richtung Himmel. Die zweite Seite ist bevorzugt eine Unterseite und ihre Flächennormale weist in im Wesentlichen Richtung Installationsfläche. In dieser bevorzugten Ausführungsform wird in Verfahrensschritt E die Verteilung der Sonnenbestrahlungsstärke für die erste Seite und für die zweite Seite berechnet. Davon ist umfasst, dass auch in zumindest einer weiteren Ebene eine Verteilung der Sonnenbestrahlungsstärke berechnet werden kann. Diese Ausführungsform ist vorteilhaft, da eine Sonnenbestrahlungsleistung von Photovoltaikmodulen mit zwei aktiven Seiten genauer berechnet werden können.

Bevorzugt umfassen die Wetterdaten in Verfahrensschritt D eine diffuse horizontale Sonnenbestrahlungsstärke (DHI), eine direkte normale Sonnenbestrahlungsstärke (DNI), einen polaren Sonneneinstrahlungswinkel und/oder einen azimuthalen Sonneneinstrahlungswinkel. Somit ist eine genauere Berechnung der Sonnenbestrahlungsstärke möglich als bisher.

In einer vorteilhaften Ausführungsform ist der maschinelle Lernalgorithmus ein Convolutional Neural Network oder ein Diffusions-Modell oder ein Modell mit Attention-Mechanismus. Dies ist vorteilhaft, da mit diesen Varianten von Lernalgorithmen leistungsfähig und besser trainierbar als andere Lernalgorithmen sind. Die Verwendung dieser Lernalgorithmen gründet in der Erkenntnis der Anmelderin, dass diese besonders gut geeignet sind, um geometrische Information, wie sie bei den Höhenbildern vorliegt, zu erlernen und wiederzugeben. Als geometrische Informationen werden dabei solche Informationen angesehen, bei denen Informationen abhängig auf definierte Koordinaten bezogen sind, wie etwa bei einem digitalen Bild ein Farbwert einer Pixelkoordinate zugeordnet ist, und bei der ein Lernalgorithmus Korrelationen zwischen benachbarten Koordinaten erlernt. Der maschinelle Lernalgorithmus wird mit Ergebnissen von Raytracing-Simulationen trainiert, sodass präzise Vorhersagen einer Verteilung der Sonnenbestrahlungsstärke ermöglicht werden.

In einer bevorzugten Ausführungsform der Erfindung wird der maschinellen Lernalgorithmus mittels eines Pixel-Wise-Loss-Optimierungsansatzes und/oder eines Adversarial-Loss-Optimierungsansatzes trainiert, insbesondere indem der Diskriminator des Adversarial-Loss-Optimierungsansatzes beurteilt, ob die Verteilung der Sonnenbestrahlungsstärke Ergebnis des Generators des Adversarial-Loss-Optimierungsansatzes oder Ergebnis einer Raytracing-Simulation ist.

In einer bevorzugten Weiterbildung umfasst das Trainieren des maschinelle Lernalgorithmus die folgenden Verfahrensschritte:
T1 Erstellen mindestens eines Datensatzes mittels höhenbasierter Szenenkodierung der Photovoltaikanlage und weiteren Eingangsdaten, wobei die Eingangsdaten zumindest Wetterdaten umfassen;
T2 Berechnen einer Verteilung der Sonnenbestrahlungsstärke zumindest auf Installationshöhe, bevorzugt für eine erste Seite der Photovoltaikmodule und eine zweite Seite der Photovoltaikmodule, und/oder entlang der Installationsfläche der Photovoltaikanlage mittels Raytracing-Simulation;
T3 Trainieren des maschinellen Lernalgorithmus mittels des Datensatzes und der Verteilung der Sonnenbestrahlungsstärke.

Eine Szenenkodierung ist eine Beschreibung der Geometrie der Photovoltaikanlage, wobei zumindest ein Neigungswinkel und Abmessungen der Photovoltaikmodule berücksichtigt sind, in maschinenlesbarer Form. Die Szenenkodierung ist höhenbasiert, indem einzelnen Punkten der Installationsfläche eine Höheninformation zugeordnet ist.

Herkömmliche Photovoltaikmodule sind üblicherweise undurchsichtig und werfen daher einen Schatten. Durch diesen Schatten können sich, je nach Ausrichtung, die Photovoltaikmodule der Photovoltaikanlage gegenseitig abschatten und so den Ertrag mindern. Der Schatten kann sich ebenso auf eine Nutzung der unter den Photovoltaikmodulen befindlichen Installationsfläche auswirken, beispielsweise im Fall einer landwirtschaftlichen Nutzung der Installationsfläche. Dieser Abschattung kann durch transparente Photovoltaikmodule entgegengewirkt werden, welche zumindest teilweise durchlässig für Sonnenlicht sind. Dies erfordert jedoch eine entsprechende Berücksichtigung bei der Berechnung der Verteilung der Sonnenbestrahlungsstärke und dementsprechend auch beim Trainieren des maschinellen Lernalgorithmus. In einer bevorzugten Ausführungsform umfassen die Eingangsdaten daher eine Transparenz der Photovoltaikmodule. Alternativ oder ergänzend zu der Transparenz umfassen die Eingangsdaten eine Albedo der Installationsfläche. Somit kann eine Verteilung der Sonnenbestrahlungsstärke präziser berechnet werden.

In einer bevorzugten Ausführungsform der Erfindung werden zusätzlich zu der Verteilung der Sonnenbestrahlungsstärke mittels des maschinellen Lernalgorithmus weitere Ausgabeparameter berechnet, bevorzugt in Form der Bestrahlungsstärke für verschiedene Wellenlängen. Die Bestrahlungsstärke für verschiedene Wellenlängen ist insbesondere vorteilhaft für die Bewertung, Optimierung und Verfolgung des Einsatzes von Tandemsolarzellen (z. B. Pero-Si-Zellen, die sehr effizient sind) mit unterschiedlichen Bandlücken. Aber auch für die Optimierung des Pflanzenwachstums auf der Installationsfläche ergeben sich Vorteile.

In einer bevorzugten Ausführungsform der Erfindung werden spektral aufgelöste Wetterdaten verwendet. Insbesondere im Zusammenhang mit der Berechnung der Bestrahlungsstärke für verschiedene Wellenlängen ist die Verwendung spektral aufgelöster DNI-Werte als Eingangsdaten vorteilhaft. In den Wetterdaten liegen somit für unterschiedliche Wellenlängenbereiche DNI-Werte vor. Der Bezug der DNI-Werte zu einem Wellenlängenbereich wird beim Training des maschinellen Lernalgorithmus mittrainiert. Auch die Raytracing-Simulationen für das Training des maschinellen Lernalgorithmus werden dabei mit spektral aufgelösten DNI-Werten berechnet. Auf diese Weise ist eine Solarertragsschätzung für trackbare Tandem-Photovoltaikmodule möglich.

In einer bevorzugten Ausführungsform der Erfindung wird zusätzlich eine Zellsegmentierungskarte aus der Draufsicht berechnet. Auf diese Weise lassen sich die Positionen einzelner Zellsegmente innerhalb des Moduls berechnen und insbesondere die Verteilung der Sonnenbestrahlungsstärke den einzelnen Zellsegmenten zuordnen.

Dies ist eine wertvolle Information bei der Berechnung des PV-Ertrags mit einem Ertragsmodell.

Es liegt ebenfalls im Rahmen der Erfindung, das Verfahren einzusetzen, um historische Daten zu analysieren, z.B., um Fehler im Kraftwerk festzustellen, indem gemessener und erwarteter Ertrag bzw. Kurven abweichen, oder um die optimale Systemkonfiguration für einen Standort zu bestimmen. Bei der Fehleranalyse ist es besonders vorteilhaft, dass die Einstrahlung mit räumlicher Auflösung pro Zelle eine genaue Bestimmung des Performance Ratio zwischen gemessenem und erwartetem Ertrag erlaubt. Der erwartete Ertrag wird bevorzugt abhängig von der Bestrahlungsverteilung auf dem Photovoltaikmodul bestimmt. Diese werden im einfachen Fall ohne ortsaufgelöste Auswertung nicht als Verteilung ausgewertet, sondern als konstant angenommen.

In einer bevorzugten Ausführungsform der Erfindung wird ein Verfahren zur Optimierung einer Systemkonfiguration einer Photovoltaikanlage, bevorzugt einer bestehenden Photovoltaikanlage oder einer zu planenden Photovoltaikanlage, durchgeführt wobei die Systemkonfiguration zumindest durch den Typ der Photovoltaikmodule und/oder die Anordnung der Photovoltaikmodule auf der Installationsfläche bestimmt wird, wobei das vorbeschriebene erfindungsgemäße Verfahren zum optimierten Nachführen einer Photovoltaikanlage für eine Mehrzahl Systemkonfigurationen durchgeführt wird, bevorzugt unter Einsatz historischer Wetterdaten. Zur Optimierung der Systemkonfiguration kann das Verfahren für verschiedene Konfigurationen von Photovoltaikmodule und/oder Pflanzen über eine längere Periode auf historischen Daten angewandt werden, um die Konfiguration mit der optimalen Netzinteraktion, insbesondere im Hinblick auf die bereits beschriebene Stromnachfrage, und/oder der gewünschten Pflanzenentwicklung zu bestimmen, der für diesen Standort oder diese Klimazone am besten geeignet ist. Dabei kann zum Beispiel die Transmission und/oder Absorption und/oder Bandlücke der Photovoltaikmodule variiert werden, um die Einstellungen mit den gewünschten Eigenschaften zu bestimmen.

Die Erfindung betrifft zudem ein computer-implementiertes Verfahren zum optimierten Nachführen einer Photovoltaikanlage mittels eines Machine-Learning-Modells. Die Photovoltaikanlage umfasst mehrere Photovoltaikmodule, welche in einer Installationshöhe über einer Installationsfläche angebracht sind. Das computer-implementierte Verfahren erhält als Eingangsdaten mehrere Werte zumindest eines Neigungswinkels der Photovoltaikmodule und weitere Eingangsdaten, welche zumindest Wetterdaten für zumindest einen Zeitpunkt umfassen. Es wird zumindest ein Höhenbild berechnet, welches von Geometriedaten der Photovoltaikmodule und von dem Neigungswinkel abhängt. In dem Höhenbild ist einer Vielzahl an Punkten der Installationsfläche eine Höheninformation ausgehend von der Referenzebene zugeordnet ist. Bevorzugt liegen in dem Höhenbild als Höheninformationen Abstandsinformationen der Vielzahl an Punkten der Referenzebene zu einem Photovoltaikmodul und/oder zu der Installationsfläche vor. Für jedes Höhenbild und für jeden Zeitpunkt wird anhand der Eingangsdaten und des Höhenbilds mittels des maschinellen Lernalgorithmus eine Verteilung der Sonnenbestrahlungsstärke auf Installationshöhe und/oder entlang der Installationsfläche berechnet und als Ausgangsdaten bereitgestellt.

Durch das computer-implementiertes Verfahren zum optimierten Nachführen einer Photovoltaikanlage werden ebenfalls die vorgenannten Vorteile des erfindungsgemäßen Verfahrens erreicht.

Zudem betrifft die Erfindung einen Trainingsdatensatz für das Training eines maschinellen Lernalgorithmus zur Berechnung einer Verteilung der Sonnenbestrahlungsstärke für eine Photovoltaikanlage mit mehreren Photovoltaikmodulen. Der Trainingsdatensatz umfasst zumindest Wetterdaten und Höhenbilder zumindest einer Photovoltaikanlage. Die Wetterdaten umfassen bevorzugt diffuse horizontale Sonnenbestrahlungsstärke (DHI), eine direkte normale Sonnenbestrahlungsstärke (DNI), einen polaren Sonneneinstrahlungswinkel und/oder einen azimuthalen Sonneneinstrahlungswinkel. In den Höhenbildern ist, wie vorstehend beschrieben, einer Vielzahl an Punkten der Installationsfläche ausgehend von einer Referenzebene eine Höheninformation zugeordnet. Weiter umfasst der Trainingsdatensatz Verteilungen der Sonnenbestrahlungsstärke, welche mittels Raytracing-Simulationen berechnet wurden und jeweils zu einem Höhenbild, und bevorzugt zugehörigen Wetterdaten, korrespondieren.

Insbesondere im Hinblick auf die Optimierung der Pflanzenabschattung und/oder die Handhabung der gezielten Teilabschattung von Photovoltaikmodulen wird der maschinelle Lernalgorithmus dahingehend trainiert, dass die Neigungswinkel benachbarter Photovoltaikmodule voneinander abweichen können.

Variationen der Neigungswinkel benachbarter Photovoltaikmodule sind insbesondere bei besonders unebener Topologie relevant. In diesen Fällen können beispielsweise die optimalen Neigungswinkel benachbarter Modulreihen individuell variieren. Dies findet bevorzugt Berücksichtigung im Trainingsdatensatz indem, Höhenbilder zur Verfügung gestellt werden mit einer zufälligen Auswahl an Variationen der Neigungswinkel benachbarter Photovoltaikmodule.

Bei der Teilverschattungssteuerung werden bevorzugt Bypass-Diodenbereiche von Photovoltaikmodulen, die bereits Randverschattungseffekte aufweisen, geopfert. Sobald eine Bypass-Diode für eine Modulhälfte ausgelöst wird, funktioniert diese Hälfte im Wesentlichen nicht mehr. Die Teilverschattungssteuerung priorisiert demnach die nicht verschattete Hälfte des Photovoltaikmoduls. Bevorzugt wird die Abschattung durch benachbarte Photovoltaikmodule bei der Auswertung der Zielfunktion berücksichtigt. Das Optimierungskriterium ist in diesem Fall die maximale Modul- bzw. Modulstrangleistung.

Die erfindungsgemäße Aufgabe ist ebenfalls gelöst durch eine Photovoltaikanlage mit mehreren Photovoltaikmodulen, welche in einer Installationshöhe über einer Installationsfläche angebracht sind. Die Photovoltaikanlage ist mit einer Nachführeinrichtung ausgebildet, in der die Photovoltaikmodule ausgebildet sind, einen Neigungswinkel zu ändern. Die Photovoltaikanlage umfasst zudem eine Recheneinheit, welche eingerichtet ist, das vorbeschriebene Verfahren auszuführen oder weist eine Schnittstelle auf, welche verbindbar mit einer weiteren externen Recheneinheit ist, die eingerichtet ist, das oben beschriebene erfindungsgemäße Verfahren auszuführen.

Die erfindungsgemäße Photovoltaikanlage wird bevorzugt mittels des oben beschriebenen erfindungsgemäßen Verfahrens beziehungsweise einer bevorzugten Ausführungsform des erfindungsgemäßen Verfahrens betrieben. Das erfindungsgemäße Verfahren ist bevorzugt zum Betrieb einer erfindungsgemäßen Photovoltaikanlage beziehungsweise einer bevorzugten Ausführungsform ausgebildet. Die erfindungsgemäße Photovoltaikanlage zeigt ebenfalls die vorgenannten Vorteile des erfindungsgemäßen Verfahrens.

Weiter betrifft die Erfindung ein computer-implementiertes Verfahren zum optimierten Nachführen einer Photovoltaikanlage, bei dem zumindest die vorstehend beschriebenen Verfahrensschritte A bis E ausgeführt werden, sowie ein Computerprogramm, welches Anweisungen umfasst, durch deren Ausführung eine Recheneinheit veranlasst wird, die Verfahrensschritte A bis E durchzuführen.

Die erfindungsgemäße Lösung beruht somit auf zwei wesentlichen Schritten: Erstens wird in Form des maschinellen Lernalgorithmus ein Surrogatmodell zur ortsaufgelösten Bestimmung der Verteilung der Sonnenbestrahlungsstärke für Photovoltaikmodule und darunter liegende Flächen und Objekte eingeführt. Zweitens wird dessen Nutzen in der Anwendung zur Neigungsoptimierung mithilfe von Optimierungsalgorithmen realisiert, wie z.B. dynamischer Programmierung. Das auf maschinellem Lernen basierende Surrogatmodell ersetzt zeitaufwändige Raytracer-Simulationen und ermöglicht die Berechnung Verteilung der Sonnenbestrahlungsstärke für verschiedene Wetter- und Neigungskonfigurationen innerhalb von Millisekunden. Das Surrogatmodell wird durch eine geeignete Encodierung der Szene, sowie der Wetter- und Topologiedaten trainiert. Durch die ortsaufgelöste Bestimmung der Verteilung der Sonnenbestrahlungsstärke auf Vorder- und Rückseite der Photovoltaikmodule wird eine präzise Schätzung des Solarertrags für verschiedene Konfigurationen möglich. Die Berechnung der Bestrahlung unter der Photovoltaikanlage auf der Installationsfläche ermöglicht weiterhin die Analyse des Pflanzenwachtstums und Ertragsbestimmung. Eine vollständige Kostenmatrix für eine gegebene Wettervorhersage und variierende Neigungskonfigurationen ermöglicht die Identifizierung der optimalen Neigungssequenz durch Optimierungsalgorithmen. Das erfindungsgemäße Verfahren oder eine bevorzugte Ausführungsform ist daher insbesondere dazu geeignet, die Symbiose von Photovoltaikmodule und Bepflanzung in Agri-Photovoltaikanlagen zu optimieren.

Weitere bevorzugte Merkmale der Erfindung werden anhand von Ausführungsbeispielen und den Figuren erläutert. Dabei zeigt:
- Figur 1: eine erfindungsgemäße Photovoltaikanlage in einer Seitenansicht,
- Figur 2: ein Höhenbild der Photovoltaikanlage,
- Figur 3: ein schematischer Ablauf eines erfindungsgemäßen Verfahrens und
- Figur 4: eine Kostenmatrix mit zwei Neigungsverläufen

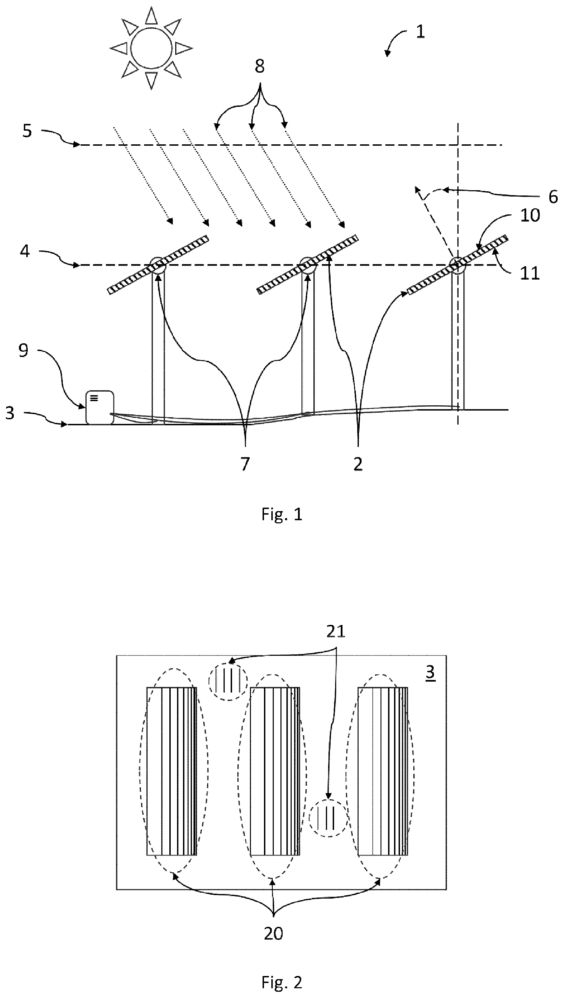

In Figur 1 ist eine beispielhafte Ausführung einer erfindungsgemäßen Photovoltaikanlage 1 dargestellt. Die Photovoltaikanlage 1 umfasst drei Photovoltaikmodule 2. Die Photovoltaikmodule 2 sind auf gleicher Installationshöhe in einer Modulebene 4 über einer Installationsfläche 3 angeordnet. Die Photovoltaikmodule 2 sind jeweils mit einer Nachführeinrichtung 7 ausgestattet, welche einen Neigungswinkel 6 der Photovoltaikmodule 6 ändern können, und besitzen eine erste Seite 10 und zweite Seite 11. Der Neigungswinkel 6 wird von einer Flächennormalen der ersten Seite 10 und einer Flächennormalen der Modulebene 4 eingeschlossen. Die drei Photovoltaikmodule 2 sind individuell neigbar und weisen in diesem Beispiel denselben Neigungswinkel 6 auf. Die Photovoltaikanlage 1 verfügt zudem über eine Recheneinheit 9, welche eingerichtet ist, das folgend beschriebene Ausführungsbeispiel eines erfindungsgemäßen Verfahrens auszuführen und die Nachführeinrichtungen 7 zu steuern.

In Figur 2 ist beispielhaft ein Höhenbild der Photovoltaikanlage 1 aus Figur 1 gezeigt. In dem Höhenbild ist die Installationsfläche 3 von einer Referenzebene 5 aus schematisch dargestellt. Die Referenzebene 5 verläuft oberhalb der Modulebene 4. Die Umrahmung des Höhenbilds entspricht einer äußeren Begrenzung der Installationsfläche 3. Die Photovoltaikmodule 2 sind wie in Figur 1 geneigt. Höheninformationen bezogen auf Punkte der Informationsfläche 3 sind anhand einer Schattierung dargestellt, wobei dunklere Bereiche einen geringeren Abstand zur Referenzebene 5 anzeigen. Die Schattierung ist nur eine mögliche Repräsentation von Höheninformation, alternativ könnten auch andere Repräsentationen gewählt werden, wie eine relationale Datenstruktur, bei der Koordinaten auf der Installationsfläche 3 eine Höheninformation zugewiesen ist. Punkte, die der weißen Fläche entsprechen, besitzen einen großen Abstand zur Referenzebene und sind ungefähr gleich weit entfernt. Diese Punkte entsprechen der Installationsfläche 3. Die drei größeren Bereiche 20 des Höhenbilds weisen einen geringen Abstand zu der Referenzebene 5 auf. Dadurch kann darauf geschlossen werden, dass auf Koordinaten des Höhenbilds, die diesen Bereichen 20 entsprechen, ein Photovoltaikmodul 2 angeordnet ist. Anhand des Höhenunterschieds innerhalb eines dieser Bereiche kann der jeweilige Neigungswinkel 6 des Photovoltaikmoduls 2 bestimmt werden. Es gibt zwei weitere Bereiche 21, welche gegenüber den Bereichen 20 der Photovoltaikmodule 2 einen größeren Abstand zur Referenzebene 5 aufweisen, die aber gegenüber den meisten anderen Punkten einen geringeren Abstand haben. Anhand der Höheninformation kann daher ermittelt werden, dass es sich um Erhebungen der im Allgemeinen unebenen Installationsfläche 3 handelt.

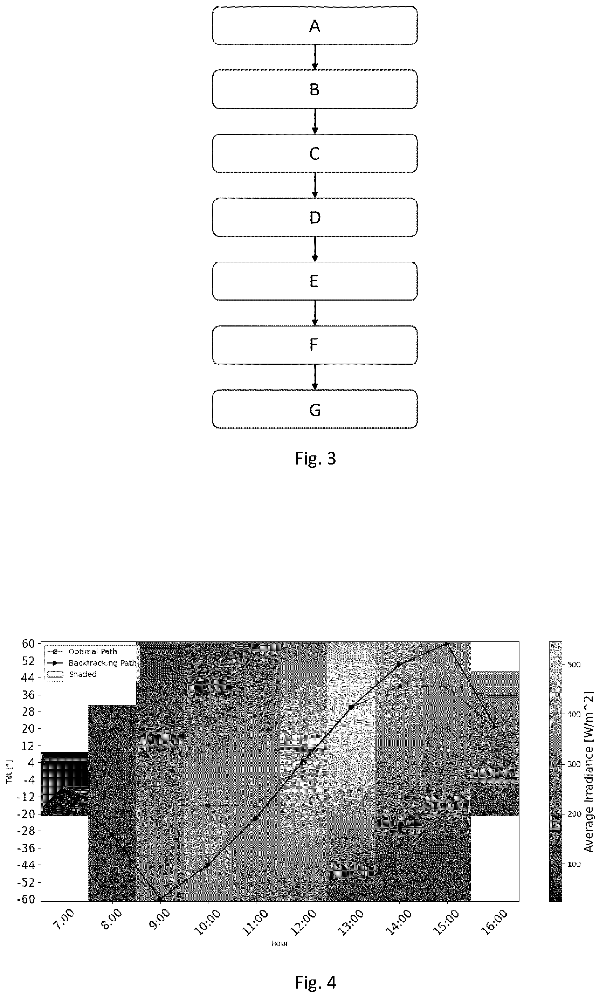

Figur 3 zeigt eine schematische Darstellung eines Ausführungsbeispiels des erfindungsgemäßen Verfahrens. Das Verfahren wird mit einer wie in Figur 1 beschriebenen

Photovoltaikanlage 1 mit drei Photovoltaikmodulen 2 durchgeführt, die in einer Modulebene 4 angeordnet sind. Die Installationsfläche 3 ist näherungsweise eben und erstreckt sich parallel zu der Modulebene 4. Die Verfahrensschritte A bis G werden mit der Recheneinheit 9 ausgeführt. Dazu ist die Recheneinheit mit einem maschinellen Lernalgorithmus eingerichtet.

Der maschinelle Lernalgorithmus ist vorliegend als Convolutional Neural Network ausgebildet. Zum Trainieren des maschinellen Lernalgorithmus wurde ein Trainigsdatensatz erstellt, der zumindest Wetterdaten und Höhenbilder von verschiedenen Photovoltaikanlagen als Eingangsdaten umfasst. Zudem umfasst der Trainingsdatensatz Verteilungen einer Sonnenbestrahlungsstärke der Photovoltaikanlagen, die den Höhenbildern entsprechen. Die Verteilungen der Sonnenbestrahlungsstärke wurde mittels Raytracing-Simulationen berechnet.

In einem Verfahrensschritt A werden in 2°-Schritten Werte des Neigungswinkels zwischen -40° und +40° gewählt, also 41 Werte. Zur besseren Veranschaulichung wird für die drei Photovoltaikmodule 2 jeweils ein gemeinsamer Neigungswinkel 6 gewählt. Alternativ könnte für jedes der Photovoltaikmodule 2 ein individueller Wertebereich gewählt werden und damit die folgenden Verfahrensschritte durchgeführt werden, wodurch üblicherweise eine größere Anzahl an Werten oder Werte-Kombinationen des Neigungswinkels ausgewählt würde.

In Verfahrensschritt B wird eine Referenzebene 5 gewählt. Die Referenzebene 5 verläuft parallel zur Modulebene 4 und vorliegend auch ungefähr parallel zu der näherungsweise ebenen Installationsebene 3. Dabei ist unerheblich, wo sich die Referenzebene 5 in Bezug auf die Modulebene 4 oder die Installationsfläche 3 befindet. Vorliegend liegt die Referenzebene 5 oberhalb der Modulebene 4.

Für jeden der in Verfahrensschritt A gewählten Werte des Neigungswinkels 6 wird in Verfahrensschritt C ein Höhenbild erstellt, wie anhand von Figur 2 erläutert.

In einem Verfahrensschritt D werden aus einer Wetterprognose Wetterdaten ausgelesen. Diese umfassen eine diffuse horizontale Sonnenbestrahlungsstärke (DHI), eine direkte normale Sonnenbestrahlungsstärke (DNI), einen polaren Sonneneinstrahlungswinkel und einen azimuthalen Sonneneinstrahlungswinkel. Zusätzlich werden historische Wetterdaten und zugehörige Daten eines Energieertrags abgerufen. Sowohl die Wetterdaten der Wetterprognose als auch die historischen Wetterdaten entsprechen jeweils einem Zeitpunkt - bei den prognostizierten Wetterdaten einem zukünftigen Zeitpunkt und bei den historischen Wetterdaten einem vergangenen Zeitpunkt. Die Wetterdaten und die historischen Daten werden als Eingangsdaten bereitgestellt. Ergänzend könnte eine Albedo der Installationsfläche und/oder eine Transparenz der Photovoltaikmodule 2 in den Eingangsdaten miteinbezogen werden (vorausgesetzt, dass der maschinelle Lernalgorithmus auch entsprechend trainiert wurde).

In Verfahrensschritt E werden anhand der Eingangsdaten und der Höhenbilder jeweils für einen zukünftigen Zeitpunkt Verteilungen der Sonnenbestrahlungsstärke mittels des maschinellen Lernalgorithmus berechnet. So wird eine Anzahl an Verteilungen berechnet, die dem Produkt der Anzahl der Höhenbilder und der Anzahl der zukünftigen Zeitpunkte entspricht. Es wurden 41 Höhenbilder berechnet (eines für jeden Wert des Neigungswinkels 6). Wenn nun für jede der folgenden 24 Stunden die Verteilungen berechnet werden sollen, dann wird der maschinelle Lernalgorithmus 984-mal ausgeführt. Da für jedes Höhenbild eine Verteilung berechnet wird, sind die berechneten Verteilungen jeweils dem eingegebenen Höhenbild zuordenbar.

In Verfahrensschritt F werden die zuvor berechneten Verteilungen der Sonnenbestrahlungsstärke verwendet, um für jede Verteilung eine Zielfunktion auszuwerten. Für die Ermittlung der Zielfunktion wird für das einer Verteilung zugehörige Höhenbild eine Vielzahl an Punkten ermittelt, an denen sich ein Photovoltaikmodul 2 befindet. Für die Menge dieser Punkte wird dann ein Durchschnittswert der Sonnenbestrahlungsstärke anhand der Werte der Verteilung berechnet. Der Wert der Zielfunktion entspricht dem ermittelten Durchschnittswert der Sonnenbestrahlungsstärke.

In Verfahrensschritt F wird anhand der Werte der Zielfunktion für jeden zukünftigen Zeitpunkt, vorliegend also für die folgenden 24 Stunden, ein Wert des Neigungswinkels 6 ausgewählt.

Dazu wird eine Verlustfunktion ermittelt, welche neben dem Wert der Zielfunktion einen Energiebedarf zum Neigen der Photovoltaikmodule 2 berücksichtigt. Die Verlustfunktion kann auf die Form Σ*ᵢ zᵢ*(ω*ᵢ*) *- c*(|*ωᵢ - ω*_{*i+*1}|) zurückgeführt werden, wobei der Index *i* über die kommenden 24 Stunden läuft, *zᵢ*(*ωᵢ*) ein Wert der Zielfunktion zum Zeitpunkt i für den Winkel *ωᵢ* ist und *c*(|*ωᵢ - ω*_{*i*+1}|) den Energiebedarf zum Neigen der Photovoltaikmodule 2 zwischen zwei aufeinanderfolgenden Zeitpunkten beschreibt. *zᵢ* und *c* repräsentieren in diesem Beispiel die erzeugte Energie und verbrauchte Energie durch das PV-Kraftwerk. Die Verlustfunktion wird mittels eine Discrete Dynamic Programming-Algorithmus optimiert. Für jede der folgenden 24 Stunden wird dann derjenige Neigungswinkel 6 ausgewählt, für den die Verlustfunktion optimal ist, und zum Einstellen bereitgestellt.

In einem nachfolgenden Verfahrensschritt wird die ermittelte Sequenz von Neigungswinkeln 6 an der Photovoltaikanlage eingestellt und so die Photovoltaikmodule 2 nachgeführt.

Figur 4 zeigt ein Anwendungsbeispiel des erfindungsgemäßen Verfahrens, bei dem eine Kostenmatrix mit dem maschinellen Lernalgorithmus als Surrogat-Modell für einen Tagesverlauf und variierenden Neigungswinkeln erstellt wurde. Als Zielfunktion wurden im Beispiel die Maximierung der mittleren Einstrahlungswerte auf dem mittleren PV-Modul-String über jeweils eine Stunde gewählt. Der optimale Kostenpfad wurde mittels dynamischer Programmierung bestimmt und berücksichtigt die Kosten der Neigungseinstellung zwischen den Zuständen. Der optimale Neigungsverlauf weicht von dem üblichen Neigungsverlauf von PV-Kraftwerken ab, welcher in der Regel dem Verlauf der Sonne folgt.

### Bezugszeichenliste

- 1: Photovoltaikanlage
- 2: Photovoltaikmodul
- 3: Installationsfläche
- 4: Installationshöhe/Modulebene
- 5: Referenzebene
- 6: Neigungswinkel
- 7: Nachführeinrichtung
- 8: Direkte Sonneneinstrahlung
- 9: Recheneinheit
- 10: Erste Seite eines Photovoltaikmoduls
- 11: Zweite Seite eines Photovoltaikmoduls
- 20: Höhenbildbereich mit Photovoltaikmodul
- 21: Höhenbildbereich mit Erhebung der Installationsfläche

## Patentansprüche

1. Verfahren zum optimierten Nachführen einer Photovoltaikanlage (1) mittels eines maschinellen Lernalgorithmus, für eine Photovoltaikanlage (1) mit mehreren Photovoltaikmodulen (2), welche in einer Installationshöhe (4) über einer Installationsfläche (3) angebracht sind, umfassend die folgenden Verfahrensschritte:
A Auswählen mehrerer Werte zumindest eines Neigungswinkels (6) der Photovoltaikmodule (2);
B Festlegen einer Referenzebene (5);
C Erstellen eines Höhenbilds der Photovoltaikanlage (1) für jeden ausgewählten Wert des zumindest einen Neigungswinkels (6) derart, dass das Höhenbild für eine Vielzahl an Punkten der Installationsfläche (3) eine Höheninformation ausgehend von der Referenzebene (5) umfasst;
D Bereitstellen von Eingangsdaten, welche zumindest Wetterdaten für zumindest einen Zeitpunkt umfassen;
E Berechnen einer Verteilung der Sonnenbestrahlungsstärke auf Installationshöhe (4) und/oder entlang der Installationsfläche (3) für jedes Höhenbild und den zumindest einen Zeitpunkt anhand des Höhenbilds und der Eingangsdaten mittels des maschinellen Lernalgorithmus;
F Auswerten einer Zielfunktion für jede der in Verfahrensschritt E berechneten Verteilungen der Sonnenbestrahlungsstärke, wobei die Zielfunktion zumindest von der Verteilung der Sonnenbestrahlungsstärke abhängt;
G Auswählen von zumindest einem Wert des Neigungswinkels (6) anhand der Zielfunktion für den zumindest einen Zeitpunkt.

2. Verfahren nach Anspruch 1,
**dadurch gekennzeichnet, dass** das Höhenbild die Höheninformation in Form eines Abstands zwischen der Referenzebene (5) und einem Photovoltaikmodul (2) senkrecht zu der Referenzebene (5) oder an Punkten, an denen kein Photovoltaikmodul (2) angeordnet ist, einen Höhenwert der Installationsfläche (3) aufweist.

3. Verfahren nach einem der vorangegangenen Ansprüche,
**dadurch gekennzeichnet, dass** ein weiterer Verfahrensschritt ausgeführt wird, in dem die in Verfahrensschritt G ausgewählten Werte an der Photovoltaikanlage (1) eingestellt werden.

4. Verfahren nach einem der vorangegangenen Ansprüche,
**dadurch gekennzeichnet, dass** die Zielfunktion von einer durchschnittlichen Sonnenbestrahlungsstärke auf Installationshöhe (4) und/oder einem Energieertrag der Photovoltaikanlage (1) und/oder einem auf die Stromnachfrage und/oder den Pflanzenbedürfnissen angepassten von auf der Installationsfläche (3) angebauten Pflanzen abhängt.

5. Verfahren nach einem der vorangegangenen Ansprüche,
**dadurch gekennzeichnet, dass** in Verfahrensschritt G das Auswählen der Werte des Neigungswinkels (6) abhängig von einem Optimierungsalgorithmus, bevorzugt abhängig von einem Discrete Dynamic Programming-Verfahren, erfolgt.

6. Verfahren nach Anspruch 5,
**dadurch gekennzeichnet, dass** mittels des Optimierungsalgorithmus eine Verlustfunktion optimiert wird, welche von den in Verfahrensschritt F ermittelten Werten der Zielfunktion sowie von einem Energiebedarf zum Nachführen der Photovoltaikmodule (2) abhängt.

7. Verfahren nach einem der vorangegangenen Ansprüche,
**dadurch gekennzeichnet, dass** die Photovoltaikmodule (2) eine erste Seite (10), bevorzugt eine Oberseite, und eine zweite Seite (11), bevorzugt eine Unterseite, aufweisen und in Verfahrensschritt E die Verteilung der Sonnenbestrahlungsstärke für die erste Seite (10) und für die zweite Seite (11) berechnet wird.

8. Verfahren nach einem der vorangegangenen Ansprüche,
**dadurch gekennzeichnet, dass** die Wetterdaten, insbesondre bevorzugt spektral aufgelöste Wetterdaten, in Verfahrensschritt D eine diffuse horizontale Sonnenbestrahlungsstärke (DHI), eine direkte normale Sonnenbestrahlungsstärke (DNI), einen polaren Sonneneinstrahlungswinkel und/oder einen azimuthalen Sonneneinstrahlungswinkel umfassen.

9. Verfahren nach einem der vorangegangenen Ansprüche,
**dadurch gekennzeichnet, dass** der maschinelle Lernalgorithmus ein Convolutional Neural Network oder ein Diffusions-Modell oder ein Modell mit Attention-Mechanismus ist, welches mit Ergebnissen von Raytracing-Simulationen trainiert ist.

10. Verfahren nach Anspruch 9,
**dadurch gekennzeichnet, dass** der maschinellen Lernalgorithmus mit den folgenden Verfahrensschritten trainiert wird:
T1 Erstellen mindestens eines Datensatzes mittels höhenbasierter Szenenkodierung der Photovoltaikanlage (1) und weiteren Eingangsdaten, wobei die Eingangsdaten zumindest Wetterdaten umfassen;
T2 Berechnen einer Verteilung der Sonnenbestrahlungsstärke zumindest auf Installationshöhe (4), bevorzugt für eine erste Seite (10) der Photovoltaikmodule (2) und eine zweite Seite (11) der Photovoltaikmodule (2), und/oder entlang der Installationsfläche (3) der Photovoltaikanlage (1) mittels Raytracing-Simulation;
T3 Trainieren des maschinellen Lernalgorithmus mittels des Datensatzes und der Verteilung der Sonnenbestrahlungsstärke.

11. Verfahren nach einem der vorangegangenen Ansprüche,
**dadurch gekennzeichnet, dass** die Eingangsdaten eine Transparenz der Photovoltaikmodule (2) und/oder eine Albedo der Installationsfläche (3) umfassen und/oder dass die Verteilung der Sonnenbestrahlungsstärke in Verfahrensschritt E für mehrere Wellenlängen berechnet wird.

12. Verfahren zur Optimierung einer Systemkonfiguration einer Photovoltaikanlage, wobei die Systemkonfiguration zumindest durch den Typ der Photovoltaikmodule und/oder die Anordnung der Photovoltaikmodule auf der Installationsfläche bestimmt wird, wobei das Verfahren nach einem der Ansprüche 1 bis 11 für eine Mehrzahl Systemkonfigurationen durchgeführt wird, bevorzugt unter Einsatz historischer Wetterdaten.

13. Computer-implementiertes Verfahren zum optimierten Nachführen einer Photovoltaikanlage (1) mit mehreren Photovoltaikmodulen (2), welche in einer Installationshöhe (4) über einer Installationsfläche (3) angeordnet sind, mittels eines Machine-Learning-Modells, wobei das computer-implementierte Verfahren mehrere Werte zumindest eines Neigungswinkels (6) der Photovoltaikmodule (2) und weitere Eingangsdaten, welche zumindest Wetterdaten für zumindest einen Zeitpunkt umfassen, erhält, zumindest ein Höhenbild berechnet, wobei das Höhenbild von Geometriedaten der Photovoltaikmodule (2) und von dem Neigungswinkel (6) abhängt und wobei in dem Höhenbild einer Vielzahl an Punkten der Installationsfläche (3) eine Höheninformation ausgehend von der Referenzebene (5) zugeordnet ist,
sowie der maschinelle Lernalgorithmus eine Verteilung der Sonnenbestrahlungsstärke auf Installationshöhe (4) und/oder entlang der Installationsfläche (3) für jedes Höhenbild und jeden Zeitpunkt anhand des Höhenbilds und der Eingangsdaten berechnet und als Ausgangsdaten bereitstellt.

14. Trainingsdatensatz für das Training eines maschinellen Lernalgorithmus zur Berechnung einer Verteilung der Sonnenbestrahlungsstärke für eine Photovoltaikanlage (1) mit mehreren Photovoltaikmodulen (2), insbesondere nach Anspruch 12, umfassend:
- Wetterdaten, vorzugsweise diffuse horizontale Sonnenbestrahlungsstärke (DHI), eine direkte normale Sonnenbestrahlungsstärke (DNI), einen polaren Sonneneinstrahlungswinkel und/oder einen azimuthalen Sonneneinstrahlungswinkel;
- Höhenbilder zumindest einer Photovoltaikanlage (1), wobei in den Höhenbildern einer Vielzahl an Punkten der Installationsfläche (3) ausgehend von einer Referenzebene (4) eine Höheninformation zugeordnet ist;
- Verteilungen einer Sonnenbestrahlungsstärke, welche mittels Raytracing-Simulationen berechnet wurden.

15. Computerprogramm, welches Anweisungen umfasst, durch deren Ausführung eine Recheneinheit (9) veranlasst wird, zumindest die Verfahrensschritte A bis E des Verfahrens gemäß einem der Ansprüche 1 bis 11 auszuführen.

16. Photovoltaikanlage (1) umfassend mehrere Photovoltaikmodulen (2), welche in einer Installationshöhe (4) über einer Installationsfläche (3) angebracht sind, wobei die Photovoltaikanlage (1) mit einer Nachführeinrichtung (7) ausgebildet ist, in der die Photovoltaikmodule (2) ausgebildet sind, einen Neigungswinkel (6) zu ändern, und eine Recheneinheit (9), welche Recheneinheit (9) eingerichtet ist, ein Verfahren gemäß einem der Ansprüche 1 bis 13 auszuführen.

17. Computer-implementiertes Verfahren zum optimierten Nachführen einer Photovoltaikanlage (1) nach Anspruch 15, wobei zumindest die Verfahrensschritte A bis E des Verfahrens gemäß einem der Ansprüche 2 bis 11 ausgeführt werden.
